# EUROPÄISCHE PATENTANMELDUNG

(11) **EP 0 718 502 A1**
(43) Veröffentlichungstag der Anmeldung: **26.06.1996**
(21) Anmeldenummer: 95118908.3
(22) Anmeldetag: 01.12.1995
(51) Int. Cl.: F04D 29/16, F04D 23/00

(54) **Seitenkanalgebläse**

(30) Priorität: 23.12.1994 DE 9420591 U
(71) Anmelder: Firma J. Eberspächer, D-73730 Esslingen (DE)
(72) Erfinder: Gaysert, Gerhard, D-73728 Esslingen (DE)

(57) **Zusammenfassung**

Die vorliegende Erfindung bezieht sich auf ein Seitenkanalgebläse mit einem Laufrad mit über den Umfang aneinander gereihten Förderkanälen, einem von diesem abgedeckten ringsegmentförmigen Seitenkanal in einem Seitenkanalgehäuse des Gebläses und einer Unterbrecherfläche zwischen den eine Zu- bzw. eine Abströmöffnung aufweisenden Enden des Seitenkanals, insbesondere für die Verbrennungsluftzufuhr bei Fahrzeugheizgeräten. Um bei einem derartigen Seitenkanalgebläse mit hohem Wirkungsgrad den Fertigungs- und Montageaufwand möglichst gering halten zu können, d.h. nicht mit extrem geringen Fertigungs- und Montagetoleranzen arbeiten zu müssen, ist erfindungsgemäß von den plan gegenüber dem Laufrad (3) liegenden Oberflächenbereichen (8), (9) des Seitenkanalgehäuses (1) zumindest ein Teilbereich der Unterbrecherfläche (8) im Sinne einer zumindest starken Aufrauhung profiliert.

## Beschreibung

Die Erfindung betrifft ein Seitenkanalgebläse nach dem Oberbegriff des Schutzanspruchs 1.

Bei derartigen Seitenkanalgebläsen stellt eine starke Abhängigkeit der hydraulischen Leistungsfähigkeit von dem Spalt zwischen Laufrad und Seitenkanalgehäuse ein fertigungstechnisches Problem dar. Bei Fahrzeugheizgeräten in einem Leistungsbereich zwischen 2 und 10 KW dürfen die Laufradspalte üblicherweise nur im Bereich von 0,15 bis 0,3 mm liegen. Ein größerer Spalt führt zu einer erheblichen Verschlechterung der Leistung und ist daher nicht zulässig.

Um den Laufradspalt auf den vorgenannten engen Bereich begrenzt zu halten, ist ein hoher Fertigungs- und Montageaufwand notwendig.

Hiervon ausgehend beschäftigt sich die Erfindung mit dem Problem, bei einem Seitenkanalgebläse mit hohem Wirkungsgrad den Fertigungs- und Montageaufwand möglichst gering halten zu können, d.h. nicht mit extrem geringen Fertigungs- und Montagetoleranzen arbeiten zu müssen.

Eine Lösung für dieses Problem zeigt ein gattungsgemäßes Seitenkanalgebläse in einer Ausführung nach dem kennzeichnenden Merkmal des Anspruchs 1 auf.

Diese Lösung beruht auf der Überlegung, dem Laufrad bei zu engem Spalt die Möglichkeit eines Einlaufens durch Materialabtragung in den profilierten Flächenbereichen zu geben.

Die eine Art starke Aufrauhung darstellende Profilierung kann dabei in dem gesamten Flächenbereich des Seitenkanalgehäuses vorgenommen werden, der als plane Fläche dem Laufrad direkt gegenüber liegt, d.h. es können alle diejenigen Bereiche sein, in denen ein Anlaufen des Laufrades an das Seitenkanalgehäuse möglich ist. Dies gilt insbesondere bezüglich des radial außen liegenden Randbereiches des Gebläsegehäuses, in dem es geometrisch bedingt eher zu einem Anschlagen des Laufrades an das Gebläsegehäuse kommt als radial innen.

Im Bereich der Unterbrecherfläche istes vorteilhaft, diese Fläche lediglich in demjenigen Bereich zu profilieren, der von den offenen Flächen der Förderkanäle des Laufrades bei dessen Umlauf abgedeckt wird. Im übrigen können alle anderen Flächen des Seitenkanalgehäuses, an denen das Laufrad anlaufen könnte, profiliert sein.

Besonders vorteilhaft ist es, wenn die Profilierung aus feinen Rillen besteht, die vor allem im Bereich der Unterbrecherfläche senkrecht zur Umlaufrichtung des Laufrades ausgerichtet sind. Auf diese Weise bildet sich eine Labyrinthdichtung auf der Unterbrecherfläche zwischen der Zu- und Abströmöffnung des Gebläses aus. Um diese Labyrinth-Dichung nicht zu schwächen, sollen die Rillen in dem Unterbrecherbereich radial nicht frei nach außen verlaufen. Dies ist der Grund, weshalb dort die radialen Randbereichen in der weiter oben beschriebenen Weise unprofiliert bleiben sollen.

Die Rillenstege der profilierten Bereiche sollten möglichst schneidkantenartig ausgebildet sein, damit beim Anlaufen des Laufrades ein problemloser Flächenabtrag erfolgen kann.

Vorteilhafterweise ist das Seitenkanalgehäuse zumindest in seinen dem Laufrad plan gegenüberliegenden Bereichen aus Metall und das Laufrad zumindest in seinen dem Seitenkanalgehäuse gegenüberliegenden Flächen aus Kunststoff.

Ein Ausführungsbeispiel der Erfindung ist in der Zeichnung dargestellt.

Es zeigen
- Fig. 1: einen Schnitt durch ein Seitenkanalgebläse nach der Linie I-I in Fig. 2,
- Fig. 2: einen Schnitt durch das Seitenkanalgebläse nach der Linie II-II in Fig. 1,
- Fig. 3: einen Ausschnitt in einer Ansicht nach Linie III-III in Fig. 2.

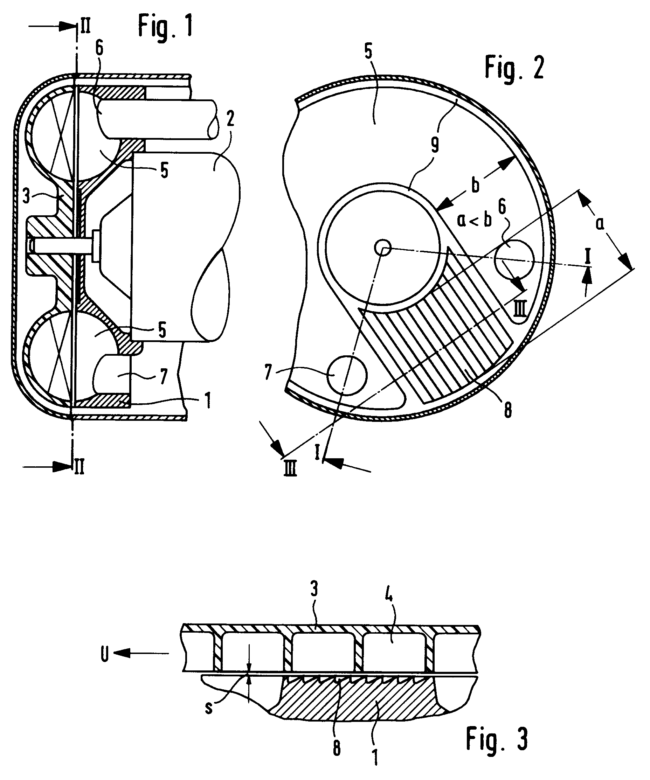

Das in Fig. 1 dargestellte Seitenkanalgebläse besteht im wesentlichen aus einem feststehenden Seitenkanalgehäuse 1 und einem über einen Motor 2 angetriebenen Laufrad 3. Das Laufrad besitzt Förderkanäle 4.

An den Enden eines ringsegmentartig geformten Seitenkanales 5 in dem Seitenkanalgehäuse 1 befindet sich eine Zuströmöffnung 6 sowie eine Abströmöffnung 7. Zwischen Zu- und Abströmöffnung 6, 7 erstreckt sich eine Unterbrecherfläche 8.

Die Oberfläche der Unterbrecherfläche 8 ist mit feinen Rillen versehen, die parallel zueinander ausgerichtet sind und etwa senkrecht zur Umlaufrichtung des Laufrades verlaufen. Der klein zu haltende Spalt zwischen Unterbrecherfläche 8 und Laufrad 3 ist in Fig. 3 mit S bezeichnet. Die Drehrichtung des Laufrades 3 deutet ein Pfeil U an. Die Rillen auf der Unterbrecherfläche 8 besitzen eine leichte Neigung gegenüber der Laufrichtung U des Laufrades, um mit ihren entsprechend geneigten Schneidkanten besonders wirksam bei einem Anlaufen des Laufrades 3 Material abtragen zu können.

Eine entsprechende Profilierung kann auch an den umlaufenden Abdichtflächen 9 des Seitenkanalgehäuses 1 vorgesehen sein.

Allerdings sollen diejenigen Bereiche der Unterbrecherfläche 8, die radial außerhalb der offenen Flächen der Förderkanäle des Laufrades 3 liegen, nicht profiliert, d.h. aufgerauht sein. In der Fig. 2 ist dies durch die Strecken a und b angedeutet, von denen a die radiale Erstreckung des in der Unterbrecherfläche 8 profilierten Bereiches angibt und die Strecke b die radiale Breite des Seitenkanales 5 wiedergibt. Bezüglich der Maße für die Strecken a und b gilt, daß das Maß der Strecke a kleiner als desjenige der Strecke b ist. Auf diese Weise wird die Labyrinthwirkung in der Unterbrecherfläche 8 nicht durch seitlich offene Rillen, durch die geförderte Luft entweichen kann, geschwächt.

Das Laufrad 3 besteht aus Kunststoff, während das Seitenkanalgehäuse aus Metall besteht.

Die in der Unterbrecherfläche 8 vorgesehene Rillierung wirkt als Labyrinthdichtung zwischen der Zuströmöffnung 6 und der Abströmöffnung 7. Dies trägt in vorteilhafter Weise zu einer Verringerung möglicher Strömungsverluste über die Unterbrecherfläche 8 bei.

## Patentansprüche

1. Seitenkanalgebläse mit einem Laufrad mit über den Umfang aneinander gereihten Förderkanälen, einem von diesem abgedeckten ringsegmentförmigen Seitenkanal in einem Seitenkanalgehäuse des Gebläses und einer Unterbrecherfläche zwischen den eine Zu- bzw. eine Abströmöffnung aufweisenden Enden des Seitenkanals, insbesondere für die Verbrennungsluftzufuhr bei Fahrzeugheizgeräten,
**dadurch gekennzeichnet**,
daß von den plan gegenüber dem Laufrad (3) liegenden Oberflächenbereichen (8), (9) des Seitenkanalgehäuses (1) zumindest ein Teilbereich der Unterbrecherfläche (8) im Sinne einer zumindest starken Aufrauhung profiliert ist.

2. Seitenkanalgebläse nach Anspruch 1,
**dadurch gekennzeichnet,**
daß die Profilierung senkrecht zur Umlaufrichtung des Laufrades (3) verlaufende feine Rillen sind.

3. Seitenkanalgebläse nach Anspruch 2,
**dadurch gekennzeichnet,**
daß die Unterbrecherfläche (8) zumindest in einem ihrer radialen Randbereiche unprofiliert ist.

4. Seitenkanalgebläse nach Anspruch 3,
**dadurch gekennzeichnet,**
daß sämtliche von dem Laufrad (3) abgedeckten planen Gegen-Flächen des Seitenkanalgehäuses (1) mit Ausnahme des radial zumindest einen Randbereiches der Unterbrecherfläche (8) nach Anspruch 3 profiliert sind.

5. Seitenkanalgebläse nach einem der vorhergehenden Ansprüche,
**dadurch gekennzeichnet,**
daß die Stege der Rillen schneidkantenartig ausgebildet sind.

6. Seitenkanalgebläse nach einem der vorhergehenden Ansprüche,
**dadurch gekennzeichnet,**
daß das Seitenkanalgehäuse (1) zumindest in seinen dem Laufrad (3) plan gegenüberliegenden Bereichen aus Metall und das Laufrad (3) zumindest in seinen dem Seitenkanalgehäuse (1) gegenüberliegenden Flächen aus Kunststoff ist.
